# EUROPÄISCHE PATENTSCHRIFT

(11) **EP 2 069 244 B1**
(45) Veröffentlichungstag und Bekanntmachung des Hinweises auf die Patenterteilung: **12.08.2015**
(21) Anmeldenummer: 07820139.9
(22) Anmeldetag: 12.09.2007
(51) Int. Cl.: C03B 19/06, G02B 5/02, C03C 17/02, H05B 3/00

(54) **SiO2-SCHLICKER FÜR DIE HERSTELLUNG VON QUARZGLAS SOWIE VERWENDUNG DES SCHLICKERS**
SiO2 SLURRY FOR THE PRODUCTION OF QUARTZ GLASS AS WELL AS THE APPLICATION OF THE SLURRY
BARBOTINE DE SiO2 POUR LA FABRICATION DE VERRE AU QUARTZ ET UTILISATION DE LA BARBOTINE

(30) Priorität: 29.09.2006 DE 102006046619
(43) Veröffentlichungstag der Anmeldung: 17.06.2009
(73) Patentinhaber: Heraeus Quarzglas GmbH & Co. KG, 63450 Hanau (DE)
(72) Erfinder: WERDECKER, Waltraud, 63456 Hanau (DE); TRAEGER, Norbert, 63477 Maintal (DE); WEBER, Juergen, 63801 Kleinostheim (DE)
(74) Vertreter: Staudt, Armin Walter
(86) Internationale Anmeldenummer: PCT/EP2007/059565
(87) Internationale Veröffentlichungsnummer: WO 2008/040615

(56) Entgegenhaltungen:
- EP-A- 1 516 864
- DE-A1- 10 319 300
- DE-A1- 19 943 103
- DE-A1-102004 051 846

## Beschreibung

Die Erfindung betrifft einen SiO₂-Schlicker zur Herstellung von Quarzglas, enthaltend eine Dispersionsflüssigkeit und amorphe SiO₂-Teilcheli mit Teilchengrößen bis maximal 500 µm, wobei SiO₂-Teilchen mit Teilchengrößen im Bereich zwischen 1 µm und 60 µm den größten Volumenanteil ausmachen, wobei der SiO₂-Nanoteilchen mit Teilchengrößen von weniger als 100 nm im Bereich zwischen 0,2 Gew.-% und 15 Gew.-% enthält, bezogen auf den gesamten Feststoffgehalt, und wobei der Feststoffgehalt, entspricht dem Gewichtsanteil der SiO₂-Teilchen und der SiO₂-Nanoteilchen zusammen, im Bereich zwischen 83 und 90 % liegt.

Außerdem betrifft die Erfindung eine besondere Verwendung des Schlickers.

Das herzustellende Quarzglas liegt als funktionelle Beschichtung eines Basiskörpers (Trägers) vor, oder in Form eines opaken oder transluzenten Quarzglasbauteils, beispielsweise einem band- oder plattenförmigen Quarzglasbauteil.

Für die Herstellung plattenförmiger Quarzglasbauteile ist eine Vielzahl unterschiedlicher Techniken bekannt. So wird in der US-PS 4,363,647 vorgeschlagen, auf einem vorgesinterten Sandbett kontinuierlich eine plane Schicht aus SiO₂-Soot mittels Abscheidebrennern abzuscheiden und unter Erzeugung einer Quarzglasplatte mittels eines Bandbrenners zu verglasen.

Es sind auch Tiegelziehverfahren für die Herstellung von Quarzglasplatten bekannt. Dabei sind jedoch die seitlichen Abmessungen der Platte durch den Durchmesser des Schmelztiegels begrenzt. Es kann zu Welligkeiten der abgezogenen Quarzglasplatte kommen und die erzielbare Maßhaltigkeit ist relativ gering. Außerdem ist die Herstellung opaker Quarzglasplatten in einem Schmelzverfahren ohne besondere Maßnahmen zur Erzeugung oder Aufrechterhaltung der Opazität im Schmelzzustand nicht möglich.

Seit einiger Zeit werden teilweise oder vollständig aus opakem Quarzglas bestehende Bauteile und Schichten für einen Einsatz als optische Reflektoren zur Erzeugung diffuser Reflexion eingesetzt. Diese Reflektoren zeichnen sich durch einen ausreichend hohen Reflexionsgrad bei sehr guter Temperatur- und Temperaturwechselbeständigkeit aus. Die DE 10 2004 051 846 A1 beschreibt die Herstellung eines derartigen Reflektors mittels eines Schlickerverfahrens. Dabei wird ein hoch gefüllter, gießfähiger, wässriger Schlicker erzeugt, der amorphe SiO₂-Teilchen enthält und der in Form einer Schlickerschicht auf einem Quarzglas-Basiskörper aufgetragen wird. Die amorphen SiO₂-Teilchen werden durch Nassmahlen von SiO₂-Körnung hergestellt und weisen eine Teilchengröße im Bereich bis maximal 500 µm auf, wobei SiO₂-Teilchen mit Teilchengrößen im Bereich zwischen 1 µm und 50 µm den größten Volumenanteil ausmachen.

Der Feststoffgehalt, die Teilchengröße und die Teilchengrößenverteilung der SiO₂-Teilchen haben Auswirkungen auf die Trockenschwindung der Schlickerschicht. So kann durch Einsatz gröberer SiO₂-Teilchen die Trockenschwindung verringert werden. Bei gleichzeitig hohem Feststoffgehalt zeigen SiO₂-Teilchen im Größenbereich 1 µm und 50 µm ein vorteilhaftes Sinterverhalten und eine vergleichsweise geringe Trockenschwindung. Daher kann die bekannte Schlickerschicht ohne Rissbildung getrocknet und verglast werden, was auch auf die Ausbildung von Wechselwirkungen der SiO₂-Teilchen untereinander in der wässrigen Phase des Schlickers zurückgeführt wird.

Zum Auftragen der Schlickerschicht auf dem Basiskörper werden Sprühen, elektrostatisch unterstütztes Sprühen, Fluten, Schleudern, Tauchen und Aufstreichen vorgeschlagen. Die Schlickerschicht wird anschließend getrocknet und verglast.

Aus der DE 103 19 300 A1 ist ein Verfahren zur Herstellung eines Formkörpers aus Quarzglas durch elektrophoretische Abscheidung bekannt. Dabei wird von einer Dispersion gemäß der eingangs genannten Gattung ausgegangen, die größere amorphe SiO₂-Teilchen mit einem D₅₀-Wert zwischen 1 bis 200 µm sowie kleinere amorphe SiO₂-Nanoteilchen mit einer Korngröße im Bereich von 1 bis 100 nm enthält. Der Anteil der SiO₂-Nanoteilchen liegt bevorzugt zwischen 1 und 10 Gew.-%, wobei den Rest auf 100 Gew.-% die größeren amorphen SiO₂-Teilchen bilden. Der Füllgrad der Dispersion liegt zwischen 10 und 80 Gew.-%, bevorzugt zwischen 50 und 70 Gew.-% und seine Viskosität liegt zwischen 1 und 1000 mPa·s, bevorzugt zwischen 1 und 100 mPa·s.

Es hat sich jedoch gezeigt, dass das Fließverhalten der bekannten Schlicker für einige Beschichtungstechniken nicht optimal ist. Unter anderem erweist sich bei einem hochgefüllten Schlicker gemäß der DE 10 2004 051 846 A1 ein "Abziehen" oder Rakeln der Schilckermasse als problematisch, und die dünnflüssige Dispersion gemäß der DE 103 19 300 A1 lässt sich zwar leicht ausgießen, fließt aber sofort von der beschichteten Oberfläche ab, so dass ledigtich ebene Beschichtungsgeometrien möglich und auch nur geringe Schichtdicken erzielbar sind, die darüber hinaus beim Trocknen und Sintern zu Rissbildung neigen.

Aus der DE 199 43 103 A1 ist ein gießfähiger, hochgefüllter SiO₂-Schlicker bekannt, der SiO₂-Teilchen mit Korngrößen von 10 bis 30 µm und vorzugsweise zusätzlich SiO₂-Nanoteilchen in einer Menge von 1 bis 10 Gew.-% enthält. Ein derartiger Schlicker weist eine bimodale Verteilung der SiO₂-Teilchengrößen auf, wobei aber eines der Verteilungsmaxima den SiO₂-Nanoteilchen zuzuordnen ist.

Da die Schlicker-Technik an und für sich eine kostengünstige Herstellung exakter Schichten und ganzer Quarzglas-Bauteile ermöglichen würde, ist es wünschenswert, die genannten Nachteile zu beseitigen.

Der Erfindung liegt daher die Aufgabe zugrunde, einen Schlicker bereit zu stellen, dessen Fließverhalten insbesondere im Hinblick auf eine Verarbeitung durch Abziehen oder Gießen der Schlickermasse und in Bezug auf ein rissfreies Trocknen und Sintern optimiert ist.

Außerdem liegt der Erfindung die Aufgabe zugrunde, eine besondere Verwendung des erfindungsgemäßen Schlickers anzugeben.

Hinsichtlich des Schlickers wird diese Aufgabe ausgehend von dem eingangs genannten Schlicker erfindungsgemäß dadurch gelöst, dass die SiO₂-Teilchen eine mehrmodale Teilchengrößenverteilung mit einem ersten Maximum der Größenverteilung im Bereich von 1 und 3 µm und einem zweiten Maximum im Bereich von 5 bis 50 µm aufweisen.

Der oben erwähnte hoch gefüllte und hochviskose Schlicker zeigt typischerweise dilatant-rheopexes Verhalten. Das bedeutet, dass der Schlicker bei mechanischer Einwirkung (wie Rühren, Schütteln, Spachteln, Aufstreichen, Abstreifen, Rakeln) eine höhere Viskosität aufweist (Dilatanz) oder dass die Viskosität nach einer mechanischen Einwirkung kurzzeitig erhöht ist (Rheopexie). Im Folgenden werden diese eng verwandten Fließeigenschaften des Schlickers gemeinsam mit den Begriffen "Rheopexie" oder "rheopex" bezeichnet.

Der bekannte Schlicker wird somit unter mechanischer Einwirkung dickflüssiger. Dieses Fließverhalten erweist sich als nachteilig beim Auftragen und Verteilen einer Schlickerschicht auf einer Oberfläche mittels eines Werkzeugs, wie beim Aufstreichen oder Abstreifen, Aufziehen, Abziehen, Schaben, Aufspachteln und dergleichen. Für diese Auftragstechniken, die im Folgenden unter dem Begriff "Rakeln" zusammengefasst werden, ist der bekannte hochviskose Schlicker wenig geeignet, da er sich unter der Einwirkung der verteilenden Kraft verfestigt und daher einer gleichmäßigen Verteilung entgegenwirkt. Im Ruhezustand kann er sich wieder verflüssigen und dann von schrägen Oberflächen abfließen. Das Foto von Figur 2 zeigt das Ergebnis eines Rakelversuchs unter Einsatz eines Schlickers wie er in der DE 10 2004 051 846 A1 beschrieben ist.

Es wurde gefunden, dass sich das Fließverhalten eines derartigen Schlickers durch den Zusatz einer geringen Menge von SiO₂-Nanoteilchen in Richtung eines eher strukturviskos-thixotropen Verhaltens verändert.

Die "Thixotropie" des Schlickers zeigt sich darin, dass seine Viskosität bei konstanter Scherbeanspruchung (etwa bei konstanter Rührgeschwindigkeit) über eine gewisse Zeit stetig abnimmt. Damit verwandt ist die "Strukturviskosität", bei der die Viskosität durch Scherung ebenfalls verringert wird, sich bei konstanter Scherbeanspruchung jedoch nicht weiter abbaut.

Im Folgenden werden diese eng verwandten Fließeigenschaften des Schlickers gemeinsam mit den Begriffen "Thixotropie" oder "thixotrop" bezeichnet. Wegen seines thixotropen Fließverhalten verflüssigt sich der erfindungsgemäße Schlicker unter Scherbeanspruchung. Diese Eigenschaft begünstigt das gleichmäßige Ausfließen und die Verteilung der Schlickermasse auf einer Oberflächeauch unter Einwirkung einer verteilend wirkenden Kraft.

Das Fließverhalten des Schlickers wird vor allem durch den Feststoffgehalt bestimmt, und zwar in Verbindung und in Abhängigkeit vom Gehalt an SiO₂-Nanoteilchen und der Teilchengrößenverteilung der amorphen SiO₂-Teilchen. Dies wird im Folgenden näher erläutert:
- Der Feststoffgehalt (Gewichtsanteil der SiO₂-Teilchen und der SiO₂-Nanoteilchen zusammen) des erfindungsgemäßen Schlickers ist mit einem Wert zwischen 83 % und 90 % relativ hoch. Der hohe Feststoffgehalt bewirkt - auch ohne den Zusatz an Nanoteilchen - eine hohe Viskosität des Schlickers und er trägt zu einer gleichmäßigen und geringen Schwindung der Schlickerschicht bei, so dass Trocknungs- und Sinterrisse vermindert werden. Bei sehr hohen Feststoffgehalten von mehr als 90 % nehmen die Weiterverarbeitungsmöglichkeiten des Schlickers ab, auch wenn er mit SiO₂-Nanoteilchen versetzt ist.
- Der Zusatz an SiO₂-Nanoteilchen erzeugt Wechselwirkungen zwischen den amorphen SiO₂-Teilchen. Das eher thixotrope Verhalten des erfindungsgemäßen Schlickers ist auf nachlassende Wechselwirkungen zwischen den SiO₂-Teilchen beim Auftreten von Scherkäften zurückzuführen. Nach dem Wegfall der Scherkräfte - im Ruhezustand der Schlickermasse - verstärken sich diese Wechselwirkungen wieder und führen zur Ausbildung physikalischer oder chemischer Bindungen zwischen den amorphen SiO₂-Teilchen der Schlickermasse untereinander, welche die ruhende Schlickerschicht stabilisieren.
- Die amorphen SiO₂-Teilchen weisen eine mehrmodale Teilchengrößenverteilung auf. Eine derartige mehrmodale Teilchengrößenverteilung mit mindestens zwei, vorzugsweise drei und mehr Verteilungsmaxima. Dies erleichtert die Einstellung einer hohen Feststoffdichte des Schlickers, wodurch die Schrumpfung beim Trocknen und Sintern und damit die Gefahr einer Rissbildung vermindert werden. Beispielsweise können Teilchenverteilungen mit D₅₀-Werten von 2, 5, 15, 30 und 40 µm allein oder in Kombination zum Einsatz kommen.

Die SiO₂-Nanoteilchen können zum Beispiel durch Oxidation oder Hydrolyse siliziumhaltiger Ausgangsverbindungen hergestellt werden (im Folgenden auch als "pyrogene Kieselsäure" bezeichnet) oder durch Polykondensation polymerisierbarer Siliziumverbindungen (SiO₂-Sol). Beim Einsatz "pyrogener Kieselsäure" ist häufig eine vorherige Reinigung sinnvoll. Zu diesem Zweck liegt die pyrogene Kieselsäure vorzugsweise in Form eines teilverfestigten, "temporären" SiO₂-Granulats vor, was den Einsatz eines üblichen Heißchlorierverfahrens zur Reinigung ermöglicht. Beim Homogenisieren des Schlickers zerfallen die gereinigten Granulatkörner infolge der auf sie einwirkenden Scherkräfte wieder in SiO₂-Nanoteilchen.

Durch Anpassen des Feststoffgehalts, der mehrmodalen Teilchengrößenverteilung und des Anteils an SiO₂-Nanoteilchen innerhalb der in Anspruch 1 genannten Bereiche ist der Schlicker an die jeweilige Verarbeitungstechnik leicht anpassbar. Dies wird im Folgenden noch näher erläutert. Geeignete Verärbeitungstechniken unter Einsatz eines derartigen Schlickers umfassen das Rakeln und das Gießen. Für die üblichen Rakel-Techniken ist ein etwas höherer Gehalt an SiO₂-Nanoteilchen sinnvoll als für Schlicker, die durch Gießen verarbeitet werden sollen.

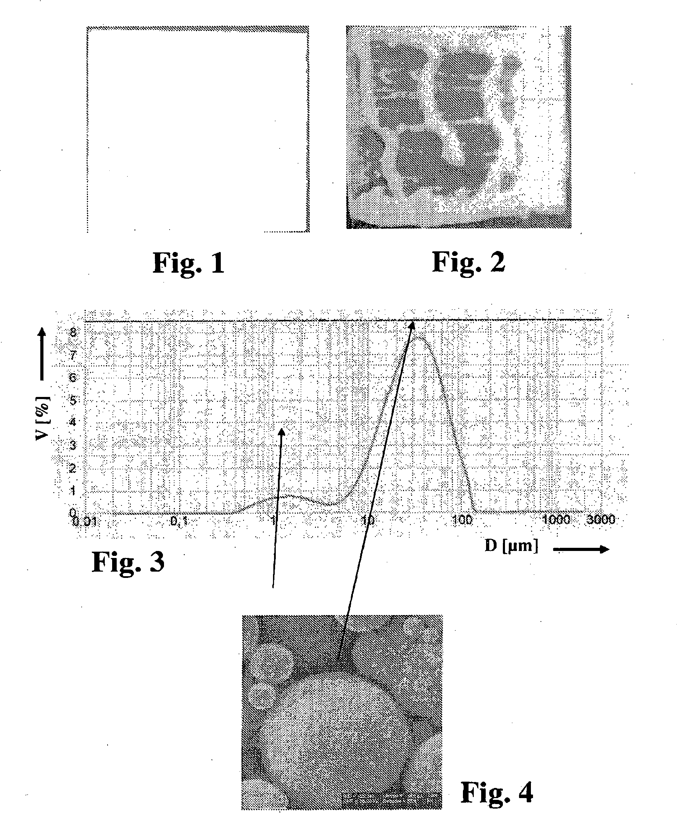

Das Foto von Figur 1 zeigt das Ergebnis eines Rakelversuchs unter Einsatz eines erfindungsgemäßen Schlickers; es ist lediglich eine gleichmäßige weiße Fläche erkennbar.

Unter SiO₂-Nanoteilchen werden hier SiO₂-Teilchen mit Teilchengrößen im Bereich einiger Nanometer bis 100 nm verstanden. Derartige Nanoteilchen haben eine spezifische Oberfläche nach BET von 40 bis 800 m²/g, bevorzugt zwischen 55 und 200 m²/g.

Bei einem Gehalt von weniger als 0,2 Gew.-% dieser Teilchen im Schlicker wirken sich die Nanoteilchen auf das Fließverhalten des Schlickers nicht nennenswert aus, wohingegen Gehalte von mehr als 15 Gew.-% zu einer verstärkten Schrumpfung des Schlickers beim Trocknen führen, die ein defektfreies Trocknen und Sintern erschweren können. Bei dünnen Schlickerschichten kann ein höherer Gehalt an SiO₂-Nanoteilchen eingesetzt werden, da dünne Schichten hinsichtlich Schwindungsrissen weniger anfällig sind als dickere Schichten.

Im Hinblick hierauf hat es sich als besonders günstig erwiesen, wenn der Schlicker zwischen 0,5 und 5 und besonders bevorzugt zwischen 1 und 3 Gew.-% an SiO₂-Nanoteilchen enthält (bezogen auf den gesamten Feststoffgehalt).

Vorzugsweise weisen die SiO₂-Nanoteilchen Teilchengrößen von weniger als 50 nm auf.

Kleine SiO₂-Nanoteilchen versiegeln und verdichten die Außenoberfläche des Grünkörpers und bewirken eine Erhöhung der Grünfestigkeit des getrockneten Schlickers und der Sinteraktivität.

Es hat sich als besonders vorteilhaft erwiesen, wenn mindestens 80 Gew.-%, bevorzugt mindestens 90 Gew.-% der SiO₂-Teilchen sphärisch ausgebildet sind.

Sphärische Teilchen erleichtern die Einstellung einer hohen Feststoffdichte im Schlicker, so dass Spannungen beim Trocknen und Sintern vermindert werden. Außerdem hat es sich gezeigt, dass sphärische SiO₂-Teilchen in opaken Quarzglasschichten zu einer erhöhten Reflexion beitragen - vor allem im infraroten Bereich. Im Idealfall sind alle SiO₂-Teilchen sphärisch ausgebildet.

In Verbindung mit einem grundsätzlich hohen Anteil an sphärische SiO₂-Teilchen hat es sich aber auch für einige Anwendungen als günstig erwiesen, wenn der Schlicker in geringer Menge feinteilige, splittrige SiO₂-Körnung enthält.

Durch den Zusatz feinteiliger, splitteriger SiO₂-Körnung, die durch Mahlen erzeugt werden kann, wird die mechanische Festigkeit des Grünkörpers nach dem Trocknen weiter erhöht. Die höhere Festigkeit macht sich insbesondere bei dicken Schlickerschichten positiv bemerkbar. Die Teilchengrößen der feinteiligen, splitterigen SiO₂-Körnung entsprechen etwa derjenigen der amorphen SiO₂-Teilchen, und der Gewichtsanteil an splitteriger Körnung beträgt maximal 10 Gew.-% (bezogen auf den gesamten Feststoffgehalt).

Vorzugsweise weisen die SiO₂-Teilchen eine Teilchengrößenverteilung auf, die durch einen D₅₀-Wert von weniger als 50 µm, vorzugsweise weniger als 40 µm, gekennzeichnet ist.

SiO₂-Teilchen in diesem Größenbereich zeigen ein vorteilhaftes Sinterverhalten und eine vergleichsweise geringe Trockenschwindung, so dass eine entsprechende Schlickerschicht besonders einfach ohne Rissbildung getrocknet und gesintert werden kann. Dies kann auf Wechselwirkungen der SiO₂-Teilchen untereinander zurückgeführt werden, die bis zur Ausbildung molekularer SiO₂-Bindungen bereits in der Schlickermasse führen, und die daher das Trocknen und Sintern erleichtern.

Die Dispersionsflüssigkeit kann auf wässriger Basis bestehen. Die polare Natur der wässrigen Phase eines solchen Schlickers kann sich auf die Wechselwirkung der SiO₂-Teilchen auswirken. Für den Schlicker gemäß der Erfindung wird aber eine Dispersionsflüssigkeit bevorzugt, die auf Basis eines organischen Lösungsmittels, vorzugsweise auf alkoholischer Basis, besteht.

Es hat sich gezeigt, dass eine derartige Dispersionsflüssigkeit die Einhaltung eines thixotropen Fließverhaltens erleichtert. Zudem erfolgt das Trocknen deutlich schneller als bei einer wässrigen Schlickerphase. Dies bringt eine Zeitersparnis mit sich und führt zu einer schnelleren Fixierung der Schlickerschicht auf einem Träger, so dass ein Auslaufen an den Rändern vermindert wird. Durch Zugabe einer geringfügigen Wassermenge (< 30 Vol.-%) in der Dispersionsflüssigkeit kann die Verarbeitungsdauer den jeweiligen Anforderungen angepasst werden.

Insbesondere im Hinblick auf eine geringe Neigung zur Rissbildung hat es sich auch als vorteilhaft erwiesen, wenn der Feststoffgehalt (Gewichtsanteil der SiO₂-Teilchen und der SiO₂-Nanoteilchen zusammen) vorzugsweise mindestens 85 Gew.-% beträgt.

Vorzugsweise bestehen die SiO₂-Teilchen und die SiO₂-Nanoteilchen aus synthetischem SiO₂.

Synthetisches SiO₂ zeichnet sich durch eine hohe Reinheit aus. Der Schlicker ist daher zur Ausbildung von opakem, hochreinem Quarzglas geeignet. Das Quarzglas hat einen Verunreinigungsgehalt von weniger als 1 Gew.-ppm, absorbiert somit im UV-Bereich bis etwa 180 nm wenig und ist damit als diffuser optischer Breitbandreflektor für einen Einsatz über einen besonders breiten Wellenlängenbereich geeignet.

Aus dem gleichen Grund beträgt der SiO₂-Gehalt der amorphen SiO₂-Teilchen beträgt vorzugsweise mindestens 99,9 Gew.-%.

Der Feststoffanteil des unter Einsatz derartiger Teilchen hergestellten Schlickers besteht zu mindestens 99,9 Gew.-% aus SiO₂ (abgesehen von Dotierstoffzugaben). Bindemittel oder andere Zusatzstoffe sind im Allgemeinen nicht erforderlich und im Idealfall nicht enthalten. Der Gehalt an Metalloxid-Verunreinigungen beträgt vorzugsweise weniger als 1 Gew.-ppm.

Der Cristobalitanteil in der getrockneten SiO₂-Schlicker-Schicht sollte höchstens 0,1 Gew.-% betragen, da es andernfalls beim Sintern der Schlicker-Schicht zu einer Kristallisation kommen kann, was zu Ausschuss führen kann.

Zur Erhöhung der Ätzbeständigkeit des aus dem Schlicker erzeugten Quarzglases hat es sich bewährt, wenn der Schlicker Stickstoff, Kohlenstoff oder eine chemische Verbindung dieser Komponenten enthält, die in die Quarzglasstruktur in Form von Nitriden oder Carbiden eingebaut werden.

Dem Schlicker werden dabei Stickstoff und/oder Kohlenstoff und/oder eine oder mehrere Verbindungen dieser Komponenten hinzugefügt. Nitride oder Carbide bewirken eine Versteifung der Quarzglasstruktur und führen zu einer besseren Ätzresistenz. Geeignete Ausgangssubstanzen, beispielsweise Silazane oder Siloxane, werden im Schlicker besonders gleichmäßig verteilt, woraus letztlich eine homogene Dotierung des Quarzglases der Glasmasse resultiert.

Hinsichtlich der Verwendung wird die oben angegeben Aufgabe erfingdungsgemäß gelöst, indem der SiO₂-Schlicker gemäß der Erfindung zur Herstellung eines diffus reflektierenden Reflektors in Form einer Reflektorschicht aus Quarzglas auf einem Träger aus Quarzglas eingesetzt wird, umfassend ein Trocknen einer Schicht des des SiO₂-Schlickers auf dem Träger und ein Sintern zu der Reflektorschicht.

Ein aus dem erfindungsgemäßen Schlicker erzeugter, diffus reflektierender Reflektor zeichnet sich durch einen besonders hohen Reflexionsgrad über einen breiten Wellenlängebereich aus. Dies wird auf den hohen Feststoffanteil des Schlickers und insbesondere auf den Zusatz von SiO₂-Nantoteilchen zurückgeführt.

Der diffus reflektierende Reflektor ist als opake SiO₂-Schicht auf einem Trägerbauteil ausgebildet. Der Reflektor kann beispielsweise in Form eines Rohres. Kolbens, einer Kammer, Glocke, Halbschale, Kugel- oder Ellipsoid-Segments, einer Platte, eines Hitzeschildes oder dergleichen vorliegen.

Die aus dem Schlicker erzeugte Reflektorschicht bildet hierbei nach dem Trocknen und Sintern des Schlickers eine Beschichtung auf einer Trägeroberfläche oder auf einem Teil derselben. Der Träger aus Quarzglas übernimmt hierbei im Wesentlichen mechanische oder chemische Grundfunktionen des Gesamtbauteils, wie etwa mechanische Festigkeit, thermische Stabilität und chemische Beständigkeit, während die Reflektorschicht die optischen Eigenschaften maßgeblich bestimmt. Typische Schichtdicken liegen im Bereich von 0,2 mm bis 3 mm.

Die Reflektorschicht und der Träger bestehen dabei aus dem gleichen Werkstoff oder zumindest aus ähnlichen Werkstoffen, was sich insbesondere auf die Haftung der Reflektorschicht auf dem Träger und auf die Temperaturwechselbeständigkeit des Gesamtbauteils vorteilhaft auswirkt.

Zur Erzeugung eines spezifischen Reflexionsverhaltens des diffus reflektierenden Reflektors hat es sich als günstig erwiesen, wenn ein Schlicker verwendet wird, der einen oder mehrere Dotierstoffe enthält, die in Quarzglas im ultravioletten, sichtbaren oder infraroten Spektralbereich eine optische Absorption erzeugen.

Der Schlicker wird bevorzugt zur Herstellung eines diffus reflektierenden Reflektors für die diffuse Reflexion im UV-Wellenlängenbereich unterhalb von 240 nm eingesetzt.

Eine hohe Reflexion im UV- Wellenlängenbereich (zum Beispiel von mehr als 90 %) bis hinab zu Wellenlängen um 180 nm setzt Opazität und extrem hohe Reinheit des Quarzglases voraus. Die Reinheit wird beispielsweise durch den Einsatz von synthetisch erzeugten SiO₂ gewährleistet, wobei insbesondere eine geringe Verunreinigung mit Lithiumoxid hervorzuheben ist. Der Gehalt an Lithium liegt unterhalb von 100 Gew.-ppb, vorzugsweise bei weniger als 20 Gew.-ppb.

Nachfolgend wird die Erfindung anhand von Ausführungsbeispielen und einer Zeichnung näher erläutert. In der Zeichnung zeigt
- **Figur 1**: ein Foto, das das Ergebnis eines Aufrakelversuchs unter Einsatz eines erfindungsgemäßen Schlickers zeigt,
- **Figur 2**: ein Foto, das das Ergebnis eines Aufrakelversuchs unter Einsatz eines Schlickers nach dem Stand der Technik zeigt,
- **Figur 3**: Ein Diagramm der SiO₂-Teilchengrößenverteilung einer Rohstoffkomponente für den Einsatz in einem erfindungsgemäßen Schlicker (vor dem Zusatz von SiO₂-Nanoteilchen), und
- **Figur 4**: eine mikroskopische Aufnahme der SiO₂-Teilchengrößenverteilung der Rohstoffkomponente von Figur 3.

### 1. Herstellen eines SiO₂₋Schlickers

**Figur 3** zeigt eine Teilchengrößenverteilung einer Rohstoffkomponente. Es handelt sich um mehrmodale Teilchengrößenverteilung mit einem verhältnismäßig engen Maximum der Größenverteilung bei etwa 30 µm (D₅₀-Wert) und mit einem Nebenmaximum im Bereich um 2 µm. Diese Rohstoffkomponente mit einem D₅₀-Wert bei 30 µm wird im Folgenden als R₃₀ bezeichnet.

**Figur 4** zeigt die Teilchengrößenverteilung als REM-Aufnahme. Es ist erkennbar, dass die einzelnen SiO₂-Teilchen rund und sphärisch ausgebildet sind.

Für die Herstellung des Schlickers werden weitere Rohstoffkomponenten eingesetzt, die D₅₀-Wert bei 5 µm, 15 µm und 40 µm aufweisen und deren Teilchengrößenverteilungen ansonsten der in den Figuren 3 und 4 Gezeigten ähnelt. Diese Rohstoffkomponenten werden je nach ihrem D₅₀-Wert mit R₅, R₁₅, beziehungsweise als R₄₀ bezeichnet. Die Rohstoffkomponenten werden jeweils vorab in einem Heißchlorierverfahren bei einer Temperatur im Bereich zwischen 600 °C und 1200 °C gereinigt:

Außerdem werden SiO₂-Nanoteilchen mit Durchmessern um 40 nm in Form "pyrogener Kieselsäure" oder in Form eines SiO₂-Sols eingesetzt. Die pyrogene Kieselsäure liegt dabei als teilverfestigtes, "temporäres" SiO₂-Granulats vor, das durch Sintern bei niedriger Temperatur im Bereich von 600 °C bis 900 °C vorbehandelt und dabei teilverdichtet wird. Zur Einstellung einer hohen Reinheit erfolgt die Vorbehandlung in einer chlorhaltigen Atmosphäre. Wegen der geringen Primärteilchengröße der Granulate ist die vergleichsweise geringe Temperatur beim Heißchlorieren ausreichend. Beim Homogenisieren der Suspension zerfallen die Granulatkörner infolge der auf sie einwirkenden Scherkräfte wieder in SiO₂-Nanoteilchen.

Folgende Rezepturen haben sich bewährt:

### Rezeptur 1

| | |
|---|---|
| R₃₀ | 500 g |
| R₁₅ | 200 g |
| R₅ | 200 g |

Pyrogene Kieselsäure: 135 g mit BET-Oberfläche von 50 m²/g.

Die genannten Komponenten werden in reinem Ethanol dispergiert, so das sich ein Feststoffgehalt von 85 Gew.-% ergibt.

### Rezeptur 2

| | |
|---|---|
| R₁₅ | 395 g |
| R₅ | 54 g |

Übliches SiO₂-Sol mit Tetraethylorthosilan (TEOS) als SiO₂-Ausgasungsmaterial in einer Menge, die ein SiO₂-Gewicht von 6 g ergibt.

Die genannten Feststoffkomponenten werden in 111 g reinem Ethanol dispergiert und in die homogene Dispersion wird das SiO₂-Sol eingemischt.

### Rezeptur 3 (Referenzbeispiel - fällt nicht unter die Erfindung)

| | |
|---|---|
| R₁₅ | 270 g |
| R₅ | 35 g |

Pyrogene Kieselsäure: 4 g mit BET-Oberfläche von 50 m²/g

Diese Komponenten werden in 70 g Polivinylbutural in Methanol dispergiert.

Die so erzeugten hoch gefüllten Schlicker zeigen thixotropes Verhalten. Die Schlicker sind daher "streichfähig" und aus diesem Grund für Verarbeitungstechniken wie Aufrakeln geeignet. Bei jeder Rezeptur machen die Korngrößen unterhalb von 60 µm den größten Volumenanteil der Körnung aus.

Der ausschließlich mit synthetisch hergestellten, hochreinen, sphärischen SiO₂-Partikeln erzeugte Schlicker ist frei von Cristobalit und zeichnet sich durch einen geringen Verunreinigungsgehalt von weniger als 1 Gew.-ppm aus.

**Figur 1** zeigt das Ergebnis eines Aufrakelversuchs unter Einsatz des Schlickers gemäß Rezeptur 1. Die dabei erzeugte Schicht ist durchgängig und weist eine gleichmäßige Schichtdicke auf, so dass das Foto lediglich eine homogene weiße Fläche wiedergibt. Demgegenüber ist auf dem Foto von Figur 2 eine ungleichmäßige Massenverteilung mit Verklumpungen erkennbar, wie sie sich beim Aufrakeln eines rheopexen SiO₂-Schlickers gemäß dem Stand der Technik ergibt. Ein ähnliches Ergebnis wird erhalten, wenn bei der Rezeptur 1 die pyrogene Kieselsäure weggelassen wird.

### 2. Herstellen von Quarzglas unter Einsatz des erfindungsgemäßen Schlickers

### Beispiel 1: Herstellen diffus reflektierender Oberflächenbereiche auf einem Träger

Es wird ein streichfähiger SiO₂-Schlicker gemäß der Erfindung eingesetzt, wobei die Schlickerschicht mittels eines Abziehwerkzeugs erzeugt wird, das auf eine Vorratsmasse des Schlickers dosierend und verteilend einwirkt.

Die Vorratsmasse ist entweder auf der Oberfläche des Trägers angehäuft oder sie befindet sich in einem Vorratsbehälter, von dem sie auf die Trägeroberfläche gelangen kann. Unter der mechanisch verteilenden Einwirkung des Abziehwerkzeuges kommt es in Verbindung mit den thixotropen Eigenschaften des erfindungsgemäßen Schlickers zu einer Verringerung der Viskosität, was das Ausfließen und Ausbreiten des Schlickers auf der Oberfläche des Trägers erleichtert. Dies trägt dazu bei, dass eine gleichmäßige homogene Schicht mit einer vorgegebenen Dicke erzeugt werden kann.

Bei dem Abziehwerkzeug, das in Bezug auf die Trägeroberfläche eine Relativbewegung ausführt, handelt es sich beispielsweise um ein Rakelwerkzeug, wie einen horizontal rotierenden Stab, eine Walze, eine Formspachtel oder dergleichen. Wesentlich ist, dass das Abziehwerkzeug zur Oberfläche des Trägers einen Abstand hält, welcher mit der Dicke der zu erzeugenden Schicht korreliert.

Vorzugsweise liegt die Schlicker-Vorratsmasse an einem Spalt zwischen dem Abziehwerkzeug und dem Träger an, der durch Relativbewegung zwischen Abziehwerkzeug und Träger entlang des Trägers bewegbar ist. Der Abstand zwischen Abziehwerkzeug und Träger bildet einen Spalt, an dem die zu verteilende Schlicker-Vorratsmasse anliegt und dessen Weite der Dicke der zu erzeugenden Schlickerschicht entspricht.

In der Regel wird eine konstante Schichtdicke gewünscht. Dies wird dadurch ermöglicht, dass der Spalt eine Weite aufweist, die durch ein mechanisches Führungselement vorgegeben wird, entlang dem der Träger oder das Abziehwerkzeug zur Durchführung ihrer Relativbewegung geführt werden. Dabei kann auch der Träger selbst als Führungselement eingesetzt werden.

Die Relativbewegung von Abziehwerkzeug und Träger erfolgt hierbei unter Zuhilfenahme eines mechanischen Führungselements, das einerseits die Relativbewegung koordiniert und das andererseits mittelbar oder unmittelbar den Spalt zwischen Träger und Abziehwerkzeug vorgibt. Dadurch kann bei der Durchführung der Relativbewegung eine konstante Spaltweite einfach eingehalten werden. Es handelt sich dabei zum Beispiel um eine Führungsschiene, entlang der sich das Abziehwerkzeug über den Träger bewegt. Die Spaltweite wird beispielsweise unmittelbar durch die Dicke der Führungsschiene oder mittelbar durch einen mit dem Abziehwerkzeug verbundenen Abstreifer eingestellt.

Die Schlicker-Vorratsmasse wird vorzugsweise in einem Vorratsbehälter aufgenommen, der am Abziehwerkzeug angeordnet und mit dem Spalt fluidisch verbunden ist. Die Schlicker-Vorratsmasse gelangt hierbei kontinuierlich von dem Vorratsbehälter über den Spalt auf die Oberfläche des Trägers. Der Vorratsbehälter ist Teil des Abziehwerkzeuges und gewährleistet, dass stets Schlickermasse über die gesamte Spaltbreite am Spalt anliegt. Bei einem beweglichen Abziehwerkzeug wird auch der Vorratsbehälter mit dem Abziehwerkzeug bewegt.

Der Spalt weist in der Regel eine an eine Beschichtungsfläche des Trägers angepasste Form auf. Dies ist insbesondere bei einem lang gestreckten Träger sinnvoll, dessen Beschichtungsfläche nicht plan ist, sondern beispielsweise gewölbte oder schräg verlaufende Flächen aufweist, die in Längsrichtung verlaufen. Hierbei wird die Form des Abziehwerkzeugs an das Oberflächenprofil des Trägers angepasst und so dafür Sorge getragen, dass die Spaltweite - quer zur Bewegungsrichtung der Relativbewegung gesehen - konstant ist.

Im Ausführungsbeispiel wird der Schlicker gemäß Rezeptur 2 zur Herstellung einer Reflektorschicht auf einem Hüllrohr für einen IR-Strahler in Form eines sogenannten "Zwillingsrohres" aus Quarzglas eingesetzt.

Ein Zwillingsrohr besteht aus einem im Querschnitt 8-förmigen Hüllrohr aus Quarzglas, das durch einen Mittelsteg in zwei Teilräume unterteilt ist, die zur Aufnahme jeweils einer Heizwendel dienen. Auf der der Hauptabstrahlrichtung abgewandten Oberseite des Hüllrohres soll eine Reflektorschicht in Form einer Opakbeschichtung aus SiO₂ für diffuse Reflexion ausgebildet werden. Deren Herstellung wird im Folgenden näher erläutert.

Die Oberfläche des Zwillingsrohres wird mit Alkohol und anschließend zur Beseitigung anderer Oberflächenverunreinigungen, insbesondere von Alkali- und Erdalkakali-Verbindungen, in 3 %-iger Flusssäure gereinigt. Das Zwillingsrohr wird daraufhin in eine Rakeleinrichtung eingelegt. Diese besteht aus einem langgestreckten Träger für die Auflage des Zwillingsrohres, einer Führungsschiene und einem Abziehwerkzeug mit integriertem Schlicker-Vorratsbehälter, das auf der Führungsschiene entlang des Zwillingsrohres verschiebbar ist. Das Abziehwerkzeug weist einen Abstreifer auf, dessen Unterseite so profiliert ist, dass er zur Oberseite des Zwillingsrohres einen Ziehspalt mit konstanter Weite von 2 mm einhält. Der Vorratsbehälter ist mit dem Ziehspalt fluidisch verbunden und - in Verschiebungsrichtung des Abziehwerkzeugs gesehen - vor diesem angeordnet.

Nicht zu beschichtende Bereiche der Oberseite des Zwillingsrohres werden mit einer Folie abgedeckt. Der Schlicker wird in den Vorratsbehälter eingefüllt und das Abziehwerkzeug zügig und gleichmäßig über die Führungsschiene entlang des Zwillingsrohres abgezogen. Dabei wirkt auf den Schlicker im Bereich des Ziehspalts eine Scherkraft ein, die infolge der thixotropen Fließeigenschaft des Schlickers zu einer Verringerung der Viskosität führt, so dass sich dieser zwischen Zwillingsrohr und Abstreifer verteilt und gleichmäßig und mit konstanter Dicke aus dem Ziehspalt austritt. Die Viskosität des auf der Beschichtungsfläche aufgetragenen und ruhenden Schlickers steigt infolge der Thixotropie unmittelbar nach dem Auftragen wieder an, so dass die Beschichtung nicht zerfließt, sondern ihre Form im Wesentlichen behält. Die Abdeckfolien werden abgezogen. Auf diese Weise wir eine im Wesentlichen konstante Schichtdicke der Schlickerschicht von etwa 1 mm erzielt.

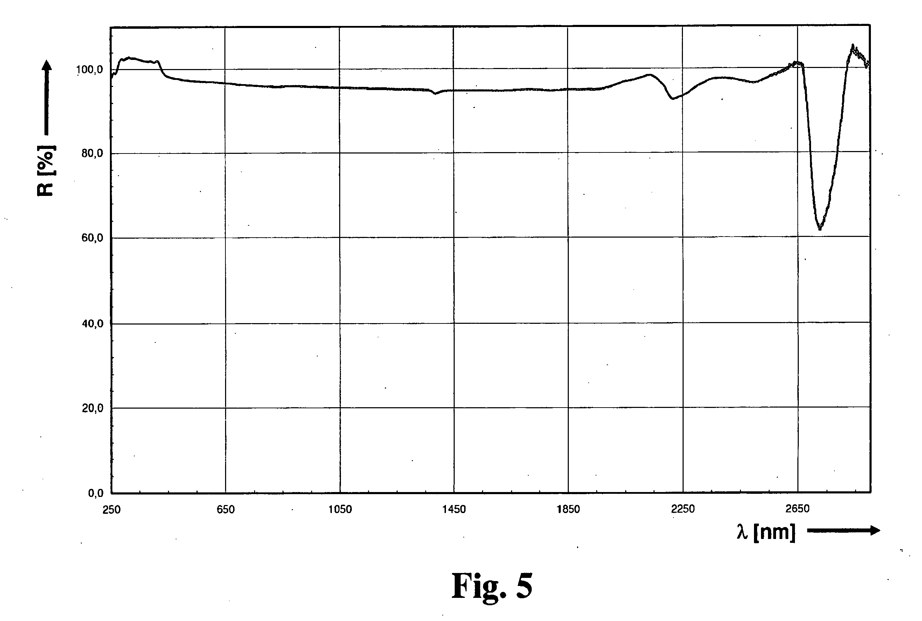

Der Einsatz der Rakeleinrichtung und des thixotropen Schlickers gemäß der Erfindung ermöglicht trotz der gewölbten Oberfläche des Zwillingsrohres eine gleichmäßige Belegung der Oberfläche mit der Schlicker-Schicht und gewährleistet so - nach dem Trocknen und Sintern - die Ausbildung einer optisch homogenen und ästhetisch ansprechenden opaken Reflektorschicht mit einer Dicke von 0,8 mm. Wegen ihrer hohen Reinheit reflektiert die Schicht auch im ultravioletten Wellenlängenbereich unterhalb von 200 nm. Die opake Reflektorschicht eignet sich auch für einen Einsatz bei hohen Temperaturen über 1000 °C. Die Reflektivität der opaken Reflektorschicht wird im Folgenden anhand der Reflexionskurve von Figur 5 näher erläutert.

**Figur 5** zeigt das Reflexionsverhalten des gemäß Beispiel 1 hergestellten diffusen Reflektors in Form einer opaken SiO₂-Opakschicht im Wellenlängenbereich von 250 bis 3000 nm. Auf der y-Achse ist der Reflexionsgrad "R" in % bezogen auf die Reflektivität von "Spectralon" aufgetragen und auf der x-Achse die Wellenlänge λ der Arbeitsstrahlung in nm. Die Reflektivität wird mittels einer Ulbrichtkugel durchgeführt.

Die Kurve zeigt den Reflexionsverlauf bei einer 0,8 mm dicken opaken SiO₂-Opakschicht, wobei das Sintern in einem Sinterofen bei 1280 °C (3h) unter Luft erfolgte. Daraus ist erkennbar, dass die SiO₂-Opakschicht aus undotiertem SiO₂ im Wellenlängenbereich zwischen etwa 300 und 2100 nm einen in etwa gleichmäßigen Reflexionsgrad R um 95 % aufweist. Der Reflexionsgrad bei 210 nm liegt immer noch höher als 98 %. Diese hohe Reflexion im VUV-Bereich eröffnet die Möglichkeit eines Einsatzes so beschichteter Bauteile zum Beispiel im Bereich der UV-Entkeimung.

### Beispiel 2: Herstellen einer Quarzglasplatte

### (Referenzbeispiel - fällt nicht unter die Erfindung)

Es wird ein homogener Schlicker anhand Rezeptur 3 hergestellt. Der Schlicker wird zur Herstellung einer Quarzglasplatte durch Rakeln eingesetzt. Dabei wird auf einem Träger eine Schlickerschicht mit einer Dicke von 5 mm erzeugt. Dies ist nur aufgrund des thixotropen Fließverhaltens des Schlickers möglich.

Nach der Trocknung der Schicht, die aufgrund des hohen Feststoffgehalts und der alkoholischen Basis der Dispersionsflüssigkeit innerhalb weniger Stunden erfolgt, wird die Schicht gesintert. Je nach Sintertemperatur und -dauer wird eine dünne Platte aus transparentem oder opakem Quarzglas erhalten.

## Patentansprüche

1. SiO₂-Schlicker zur Herstellung von Quarzglas, enthaltend eine Dispersionsflüssigkeit und amorphe SiO₂-Teilchen mit Teilchengrößen bis maximal 500 µm, wobei SiO₂-Teilchen mit Teilchengrößen im Bereich zwischen 1 µm und 60 µm den größten Volumenanteil ausmachen, wobei der SiO₂-Nanoteilchen mit Teilchengrößen von weniger als 100 nm im Bereich zwischen 0,2 Gew.-% und 15 Gew.-% enthält, bezogen auf den gesamten Feststoffgehalt, und wobei der Feststoffgehalt, entspricht dem Gewichtsanteil der SiO₂-Teilchen und der SiO₂-Nanoteilchen zusammen, im Bereich zwischen 83 und 90 % liegt, **dadurch gekennzeichnet, dass** die SiO₂-Teilchen eine mehrmodale Teilchengrößenverteilung mit einem ersten Maximum der Größenverteilung im Bereich von 1 und 3 µm und einem zweiten Maximum im Bereich von 5 bis 50 µm aufweisen.

2. Schlicker nach Anspruch 1, **dadurch gekennzeichnet, dass** er zwischen 0,5 und 5 Gew.-%, bevorzugt zwischen 1 und 3 Gew.-%, SiO₂-Nanoteilchen enthält, bezogen auf den gesamten Feststoffgehalt.

3. Schlicker nach Anspruch 1, **dadurch gekennzeichnet, dass** die SiO₂-Nanoteilchen Teilchengrößen von weniger als 50 nm aufweisen.

4. Schlicker nach Anspruch 1, **dadurch gekennzeichnet, dass** mindestens 80 Gew.-%, vorzugsweise mindestens 90 Gew.-% der SiO₂-Teilchen sphärisch ausgebildet sind.

5. Schlicker nach Anspruch 4, **dadurch gekennzeichnet, dass** er feinteilige, splittrige SiO₂-Körnung enthält.

6. Schlicker nach Anspruch 1, **dadurch gekennzeichnet, dass** die SiO₂-Teilchen eine Teilchengrößenverteilung aufweisen, die durch einen D₅₀ -Wert von weniger als 50 µm, vorzugsweise weniger als 40 µm, gekennzeichnet ist.

7. Schlicker nach Anspruch 1, **dadurch gekennzeichnet, dass** die Dispersionsflüssigkeit auf Basis eines organischen Lösungsmittels, vorzugsweise auf alkoholischer Basis, besteht.

8. Schlicker nach Anspruch 1, **dadurch gekennzeichnet, dass** der Feststoffgehalt, entspricht dem Gewichtsanteil der SiO₂-Teilchen und der SiO₂-Nanoteilchen zusammen, mindestens 85 Gew.-% beträgt.

9. Schlicker nach Anspruch 1, **dadurch gekennzeichnet, dass** die SiO₂-Teilchen und die SiO₂-Nanoteilchen aus synthetischem SiO₂ bestehen.

10. Schlicker nach Anspruch 1, **dadurch gekennzeichnet, dass** der SiO₂-Gehalt der amorphen SiO₂-Teilchen mindestens 99,9 Gew.-% beträgt.

11. Schlicker nach Anspruch 1, **dadurch gekennzeichnet, dass** er Stickstoff, Kohlenstoff oder eine chemische Verbindung dieser Komponenten enthält die in die Quarzglasstruktur in Form von Nitriden oder Carbiden eingebaut werden.

12. Verwendung eines SiO₂-Schlickers gemäß einem der Ansprüche 1 bis 11 zur Herstellung eines diffus reflektierenden Reflektors in Form einer Reflektorschicht aus Quarzglas auf einem Träger aus Quarzglas, umfassend ein Trocknen einer Schicht des SiO₂-Schlickers auf dem Träger und ein Sintern zu der Reflektorschicht.

13. Verwendung nach Anspruch 12, **dadurch gekennzeichnet, dass** der diffus reflektierende Reflektor zur Erzeugung eines spezifischen Reflexionsverhaltens einen oder mehrere Dotierstoffe enthält, die in Quarzglas im ultravioletten, sichtbaren oder infraroten Spektralbereich eine optische Absorption erzeugen.

14. Verwendung nach Anspruch 12, **dadurch gekennzeichnet, dass** der diffus reflektierende Reflektor zur diffusen Reflexion im UV-Wellenlängenbereich unterhalb von 240 nm eingesetzt wird.

## Claims

1. A SiO₂ slurry for the production of quartz glass, said SiO₂ slurry containing a dispersion liquid and amorphous SiO₂ particles with particle sizes up to a maximum of 500 µm, wherein the largest volume fraction of said SiO₂ particles is composed of SiO₂ particles with particles sizes in the range of 1 µm to 60 µm, and wherein SiO₂ nanoparticles with particle sizes of less than 100 nm are present in the SiO₂ slurry in a concentration in the range of 0.2% by wt. to 15% by wt. of the total solids content is in the range of 83% to 90%, wherein said solids content corresponds to the proportions of weight of the SiO₂ particles and of the SiO₂ nanoparticles together, **characterized in that** the SiO₂ particles have a multimodal distribution of particle sizes with a first maximum of the size distribution in the range of 1 µm to 3 µm and a second maximum in the range of 5 µm to 50 µm.

2. The slurry according to claim 1, **characterized in that** it contains between 0.5% by wt. and 5% by wt., preferably between 1 % by wt. and 3% by wt., of SiO₂ nanoparticles, based on the total solids content.

3. The slurry according to claim 1, **characterized in that** the SiO₂ nanoparticles have particle sizes of less than 50 nm.

4. The slurry according to claim 1, **characterized in that** at least 80% by wt., preferably at least 90% by wt., of the SiO₂ particles are made spherical.

5. The slurry according to claim 4, **characterized in that** it contains finely divided, splintery SiO₂ granules.

6. The slurry according to claim 1, **characterized in that** the SiO₂ particles have a particle size distribution distinguished by a D₅₀ value of less than 50 µm, preferably less than 40 µm.

7. The slurry according to claim 1, **characterized in that** the dispersion liquid is made up on the basis of an organic solvent, preferably on an alcoholic basis.

8. The slurry according to claim 1, **characterized in that** the solids content is at least 85% by wt., wherein said solids content corresponds to the proportions of weight of the SiO₂ particles and of the SiO₂ nanoparticles together

9. The slurry according to claim 1, **characterized in that** the SiO₂ particles and the SiO₂ nanoparticles consist of synthetic SiO₂.

10. The slurry according to claim 1, **characterized in that** the SiO₂ content of the amorphous SiO₂ particles is at least 99.9% by wt.

11. The slurry according to claim 1, **characterized in that** it contains nitrogen, carbon or a chemical compound of said components that are incorporated into the quartz glass structure in the form of nitrides or carbides.

12. Use of SiO₂ slurry according to any one of claims 1 to 11 for producing a diffusely reflecting reflector in form of reflector layer of quartz glass on a carrier of quartz glass, comprising a drying of the SiO₂ slurry on said carrier and a sintering so as to form the reflector layer.

13. Use according to claim 12, **characterized in that** the diffusely reflecting reflector for creating a specific reflection behavior contains one or more dopants producing an optical absorption in quartz glass in the ultraviolet, visible or infrared spectral range.

14. Use according to claim 12, **characterized in that** the diffusely reflecting reflector for diffuse reflection in the UV wave-length range is used below 240 nm.

## Revendications

1. Barbotine de SiO₂ pour la fabrication de verre de quartz, contenant une dispersion liquide et des particules amorphes de SiO₂ de taille de particules maximale de 500 µm, des particules de SiO₂ de tailles comprises entre 1µm et 60 µm représentant la plus grande part en volume, la barbotine contenant des nanoparticules SiO₂ de tailles inférieures à 100 nm entre 0,2 % et 15 % en poids, par rapport à la teneur solide totale, et la teneur en solide, correspondant à la part pondérale des particules SiO₂ et des nanoparticules SiO₂, étant comprise entre 83 et 90 %, **caractérisée en ce que** les particules SiO₂ présentent une répartition de taille de particule multimodale avec un premier maximum de la répartition entre 1 et 3 µm et un second maximum entre 5 et 50 µm.

2. Barbotine selon la revendication 1, **caractérisée en ce qu'**elle comprend des nanoparticules entre 0,5 et 5 % en poids, de préférence entre 1 et 3 % en poids.

3. Barbotine selon la revendication 1, **caractérisée en ce que** les nanoparticules de SiO₂ présentent des tailles inférieures à 50 nm.

4. Barbotine selon la revendication 1, **caractérisée en ce qu'**au moins 80 % en poids, de préférence au moins 90 % en poids des particules Si02 sont de forme sphérique.

5. Barbotine selon la revendication 4, **caractérisée en ce qu'**elle contient des grains de SiO₂ de particules fines et aigues.

6. Barbotine selon la revendication 1, **caractérisée en ce que** les particules de SiO₂ présentent une répartition de la taille des particules qui est **caractérisée par** une valeur D₅₀ inférieure à 50 µm de préférence inférieure à 40 µm.

7. Barbotine selon la revendication 1, **caractérisée en ce que** la dispersion liquide se compose d'un solvant organique de préférence à base d'alcool.

8. Barbotine selon la revendication 1, **caractérisée en ce que** la teneur en solide, correspondant au total de la part pondérale des particules et des nanoparticules de SiO₂, est d'au moins 85 % en poids.

9. Barbotine selon la revendication 1, **caractérisée en ce que** les particules de SiO₂ et les nanoparticules se composent de SiO₂ synthétique.

10. Barbotine selon la revendication 1, **caractérisée en ce que** la teneur en SiO₂ des particules amorphes de SiO₂ s'élève au moins à 99,9 % en poids.

11. Barbotine selon la revendication 1, **caractérisée en ce qu'**elle contient de l'azote, du carbone ou une composition chimique de ces composants qui sont incorporés dans la structure de verre de quartz sous forme de nitrures ou de carbures.

12. Utilisation d'une barbotine de SiO₂ selon l'une des revendications 1 à 11 pour la fabrication d'un réflecteur diffus sous forme d'une couche de réflexion en verre de quartz sur un support en verre de quartz, comprenant un séchage d'une couche de barbotine siO₂ sur le support et d'un frittage de la couche de réflecteur.

13. Utilisation selon la revendication 12, **caractérisée en ce que** le réflecteur diffus contient un ou plusieurs agents de dopage qui génèrent une absorption optique dans la plage spectrale, infra-rouge, ultraviolette ou visible.

14. Utilisation selon la revendication 12, **caractérisé en ce que** le réflecteur diffus est utilisé pour une réflexion diffuse dans la plage de longueurs d'ondes UV en dessous de 240 nm.
